# EUROPÄISCHE PATENTSCHRIFT

(11) **EP 3 187 439 B1**
(45) Veröffentlichungstag und Bekanntmachung des Hinweises auf die Patenterteilung: **27.06.2018**
(21) Anmeldenummer: 16206972.8
(22) Anmeldetag: 27.12.2016
(51) Int. Cl.: B65G 47/32, B65G 47/86, B65G 29/02

(54) **ZANGENGEBER**
LUMBER TRANSFER DEVICE
DISPOSITIF DE TRANSFERT DE BOIS

(30) Priorität: 04.01.2016 AT 22016 U
(43) Veröffentlichungstag der Anmeldung: 05.07.2017
(73) Patentinhaber: TEAM CONSTRUCT Maschinenbau Gesellschaft m.b.H., 9300 St. Veit an der Glan (AT)
(72) Erfinder: SPENDIER, Peter, 9300 Sankt Veit an der Glan (AT)
(74) Vertreter: Beer & Partner Patentanwälte KG

(56) Entgegenhaltungen:
- CA-A1- 2 148 322
- US-A- 5 518 106
- US-A- 5 662 203
- US-A- 5 931 287

## Beschreibung

Die Erfindung betrifft einen Zangengeber mit den Merkmalen des einleitenden Teils von Anspruch 1.

Zangengeber sind beispielsweise aus US 5,518,106 A und US 5,662,203 A bekannt. US 5 931 287 A offenbart ebenfalls einen Zangengeber nach dem Oberbegriff des Anspruchs 1. Zangengeber dienen dazu, Schnittholz in Form von Brettern von einem Zuführförderer, auf dem sie ungeordnet und mit unregelmäßigen Abständen herangefördert werden, auf einen weiteren Förderer, auf dem sie mit vorgegebenen Abständen bewegt werden, umzusetzen. Auf dem weiteren Förderer soll ein Beurteilen der Bretter nach unterschiedlichen Kriterien möglich sein.

Bekannte Zangengeber umfassen in der Regel mehrere gleichachsig angeordnete Scheiben, an denen nach außen vorstehende Mitnehmer vorgesehen sind.

Jedem Mitnehmer ist ein verschwenkbarer Klemmhebel mit einer Greifbacke zugeordnet. Die Klemmhebel werden von elastischen Elementen, wie Drehfedern, Gummibändern oder ähnlichen, in ihre innerhalb des Umfanges der Scheiben angeordnete Bereitschaftsstellung belastet.

Wenn ein Brett zu erfassen ist, wird ein Klemmhebel bei sich drehender Scheibe von einer Kulisse zwangsgesteuert nach außen verschwenkt, so dass schlussendlich ein Brett zwischen einem Mitnehmer an den Scheiben und einem Klemmhebel klemmend erfasst und durch die fortgesetzte Drehbewegung der Scheibe auf den zweiten Förderer umgesetzt wird. Dabei wirken Klemmhebel mit ihren Greifbacken mit Mitnehmern an der Scheibe nach Art von "Zangen" zusammen, wenn ein Brett erfasst und auf den weiteren Förderer umgesetzt wird.

Die bekannten Zangengeber, so auch der bekannte Zangengeber TCP-300 der TC Maschinenbau Ges.m.b.H. in St. Veit/Glan Österreich), haben sich gut bewährt und sind auch in der Lage, unterschiedliche Formate von Brettern mit hinreichender Leistung in der gewünschten Weise umzusetzen.

Bekannte Zangengeber haben beispielsweise an jeder Scheibe vier oder fünf Klemmhebel und dementsprechend vier oder fünf Mitnehmer in Form von Vorsprüngen an der Scheibe und sind für unterschiedliche Brettstärken und Brettbreiten geeignet.

Problematisch bei bekannten Zangengebern ist, dass die Geschwindigkeit des Umsetzens und somit die Leistungsfähigkeit durch eine Begrenzung der Taktzahl beschränkt ist.

Problematisch bei den bekannten Zangengebern ist es weiters, dass größere, insbesondere breitere, Bretter nur an ihrem äußeren, der Scheibe benachbarten Rand erfasst werden, so dass die Gefahr besteht, dass Bretter durch Ausbrechen des Holzes aus der von einem Mitnehmer und dem ihm zugeordneten Klemmhebel gebildeten Zange herausrutschen und nicht ordnungsgemäß umgesetzt werden.

Der Erfindung liegt die Aufgabe zugrunde, einen Zangengeber der eingangs genannten Gattung zur Verfügung zu stellen, der bei Bedarf auch für größere Brettquerschnitte, also größere Brettbreiten und größere Brettstärken, geeignet ist.

Gelöst wird diese Aufgabe erfindungsgemäß mit einem Zangengeber, der die Merkmale von Anspruch 1 aufweist.

Bevorzugte und vorteilhafte Ausgestaltungen des erfindungsgemäßen Zangengebers sind Gegenstand der Unteransprüche.

Bei dem erfindungsgemäßen Zangengeber sind wenigstens zwei, vorzugsweise aber, je nach Länge der umzusetzenden Bretter, mehr als zwei, Scheiben mit an ihnen verschwenkbar angeordneten Klemmhebeln und der entsprechenden Anzahl von Mitnehmern, die über den Außenumfang der Scheiben vorstehen, vorgesehen.

Bei dem erfindungsgemäßen Zangengeber werden die Klemmhebel durch elastische Elemente, wie Federn, Drehfedern, Gummibänder und dergleichen, in ihre Bereitschaftsstellung belastet, in der sie innerhalb des Außenumfanges der Scheibe mit den Mitnehmern angeordnet sind. Durch eine Kulissensteuerung werden die Klemmhebel im Bereich der Abgabestelle des Zuführförderers in ihre Wirkstellung verschwenkt und erfassen ein Brett zangenartig durch Klemmen zwischen einer Greifbacke und einem Mitnehmer. Die Bretter werden ohne Verdrehen um ihre Längsachse geordnet und mit Abstand zwischen den Brettern auf den zweiten (weiteren) Förderer, auf dem dann das Begutachten/Beurteilen der Bretter erfolgen kann, abgelegt.

Wenn mit dem erfindungsgemäßen Zangengeber größere Brettformate, also breitere und/oder dickere Bretter, umzusetzen sind, wird eine weitere, vorzugsweise nur mit Mitnehmern ausgestattete Scheibe ("Servoscheibe"), die zunächst stillsteht, in Bewegung gesetzt, so dass sie sich synchron mit den Scheiben, an denen die Klemmhebel verschwenkbar gelagert sind, dreht, wobei die Wirkflächen der Mitnehmer der Scheiben mit den Klemmhebeln mit den Wirkflächen der Mitnehmer an der weiteren (zweiten) Scheibe fluchten.

Die Mitnehmer der zweiten Scheibe, also der Servoscheibe, sind größer als die Mitnehmer an den Scheiben mit den Klemmhebeln, nämlich insbesondere mit breiterer, den Greifbacken der Klemmhebel zugekehrter Wirkfläche ausgebildet. So wird ein breiteres Brett und/oder ein dickeres Brett weiter untergriffen und somit von der "Zange", die in diesem Fall von den Mitnehmern und den Klemmhebeln an den Scheiben gemeinsam mit den Mitnehmern an der zweiten Scheibe (Servoscheibe) gebildet wird, besser gehalten.

In der Praxis ist es bevorzugt, wenn die zweite Scheibe weniger Mitnehmer aufweist als die ersten Scheiben, so dass die zweite Scheibe in eine Stellung bewegt (gedreht) werden kann, in der die Mitnehmer der zweiten Scheibe das Umsetzen von Brettern nur durch die ersten Scheiben, welche die Klemmhebel tragen, nicht behindern. Beispielsweise ist bei ersten Scheiben mit sechs Klemmhebeln und Mitnehmern eine zweite Scheibe mit (nur) drei Vorsprüngen als Mitnehmer vorteilhaft.

Bei der erfindungsgemäßen Vorrichtung wird also so die zweite Scheibe mit der geringeren Anzahl von Mitnehmern synchron mit den ersten Scheiben, an denen die Klemmhebel gelagert sind, nur bewegt, wenn ein breiteres und/oder dickeres Brett umzusetzen ist.

Dieses Mitbewegen der zweiten Scheibe kann beispielsweise durch eine Bedienungsperson oder selbsttätig durch eine Einrichtung zum Erfassen wenigstens einer der Abmessungen, z.B. der Breite, des umzusetzenden Brettes ausgelöst werden. Solche Einrichtungen können optische Einrichtungen, wie Laser, Lichtschranken oder Ähnliches, sein.

Weitere Einzelheiten und Merkmale der Erfindung ergeben sich aus der nachstehenden Beschreibung eines bevorzugten Ausführungsbeispiels eines Zangengebers an Hand der Zeichnungen, in denen ein erfindungsgemäßer Zangengeber teilweise schematisiert dargestellt ist. Es zeigt:
- Fig. 1: einen Zangengeber in Schrägansicht von der Zuführseite aus gesehen,
- Fig. 2: den Zangengeber aus Fig. 1 in Schrägansicht von der Abgabeseite aus gesehen und
- Fig. 3: schematisiert eine Seitenansicht des Zangengebers mit Zuführförderer und einen von der Abgabeseite (rechts in Fig. 3) ausgehenden zweiten Förderer.

Bei dem erfindungsgemäßem Zangengeber 1 sind wenigstens zwei erste Scheiben 2 mit an ihnen vorgesehenen Klemmhebeln 3 vorgesehen. Wenn längere Bretter umzusetzen sind, werden Zangengeber 1 mit mehr als zwei ersten Scheiben 2 mit Klemmhebeln 3, beispielsweise mit fünf Scheiben 3, verwendet.

Die Scheiben 2, an denen die Klemmhebel 3 verschwenkbar gelagert sind - im Ausführungsbeispiel sind an den Scheiben 2 sechs Klemmhebel 3 gelagert - , werden durch einen Antrieb 18 um ihre von einer Welle 21 gebildete Achse 4 in Drehung versetzt.

Der erfindungsgemäße Zangengeber 1 mit den wenigstens zwei Scheiben 2 ist zwischen einem, an der Zuführseite angeordneten Zuführförderer 5, auf dem Bretter 6 ungeordnet und in ungleichmäßigen Abständen herangebracht werden, und einem zweiten, an der Abgabeseite angeordneten Förderer 7 angeordnet.

Im Bereich zwischen dem Zuführförderer 5 (erster Förder) und dem weiteren Förderer 7, also im Bereich einer Übergabestelle 8, ist jeder Scheibe 2 eine Kulisse 9 zugeordnet. Jede Kulisse 9 weist eine Steuerfläche 10 auf, die an Rollen 11, die an einem Hebelarm 12 der Klemmhebel 3, die jeweils um Achsen 13 an den Scheiben 2 schwenkbar gelagert sind, vorgesehen sind, angreift. Durch die Kulisse 9 werden die Klemmhebel 3 aus der Bereitschaftsstellung innerhalb der Scheiben 2 in eine Stellung außerhalb der Scheiben 2 geschwenkt. Die Kulisse 9, die im Maschinengestell um eine Achse 27 schwenkbar gelagert ist, wird federnd in ihrer Wirkstellung gehalten, wozu beispielsweise pneumatische Federn 19 vorgesehen sind.

In der Wirkstellung ist die Greifbacke 14, die am längeren Hebelarm 15 der Klemmhebel 3 vorgesehen ist, außerhalb der Scheiben 2 angeordnet. Um ein Brett 6 klemmend zu erfassen, wird die Greifbacke dem zugeordneten Mitnehmer 16 der Scheiben 2 durch Schwenken des Klemmhebels 3 angenähert.

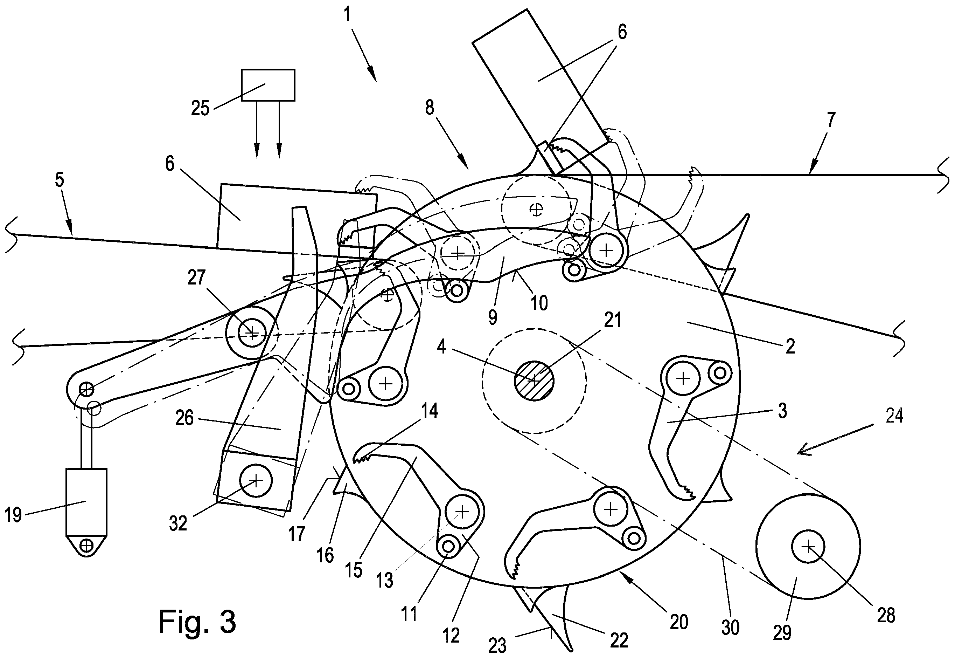

Im Bereich des Endes der Übergabestelle 8 zwischen Zuführförderer 5 und dem Förderer 7, also im Bereich des Beginns des zweiten Förderers 7, werden die Klemmhebel 3 beispielsweise von ihnen zugeordneten, elastischen Elementen so verschwenkt, dass sich ihre Greifbacken 14 von dem ihnen zugeordneten Mitnehmer 16 wegbewegen und das Brett 6 wieder loslassen, also nicht mehr zwischen dem Mitnehmer 16 an der Scheibe 2 und der Greifbacke 14 klemmen. So wird das Brett 6, ohne dass es um seine Längsachse gewendet wird, auf dem zweiten Förderer 7 abgelegt. Dann werden die Klemmhebel 3 unter Wirkung der ihnen zugeordneten elastischen Elemente wieder vollständig in die innerhalb der Scheiben 2 angeordnete Bereitschaftsstellung, die in Fig. 3 im unteren Bereich der Scheibe 2 gezeigt ist, verschwenkt.

Die Scheiben 2 tragen an ihrem Außenumfang im gezeigten Ausführungsbeispiel sechs Mitnehmer 16, die über den Außenumfang vorstehen und je eine Wirkfläche 17 aufweisen. Die Wirkflächen 17 sind zu Radialebenen geneigt, wie dies in Fig. 3 gezeigt ist.

Jedem Mitnehmer 16 an den Scheiben 2 ist ein Klemmhebel 3 zugeordnet, der ein gewinkelter, zweiarmiger Hebel ist. An dem Ende des einen (längeren) Hebelarmes 15 ist die Greifbacke 14 vorgesehen. Am Ende des anderen (kürzeren) Hebelarmes 12 ist die Rolle 11 vorgesehen, die an der Steuerfläche 10 der Kulisse 9 abrollt. So werden die Bewegungen der Klemmhebel 3 beim Erfassen eines Brettes 6, bei dem es zwischen jeweils einem Mitnehmer 16 der Scheiben 2 und einer Greifbacke 14 geklemmt wird, bewirkt.

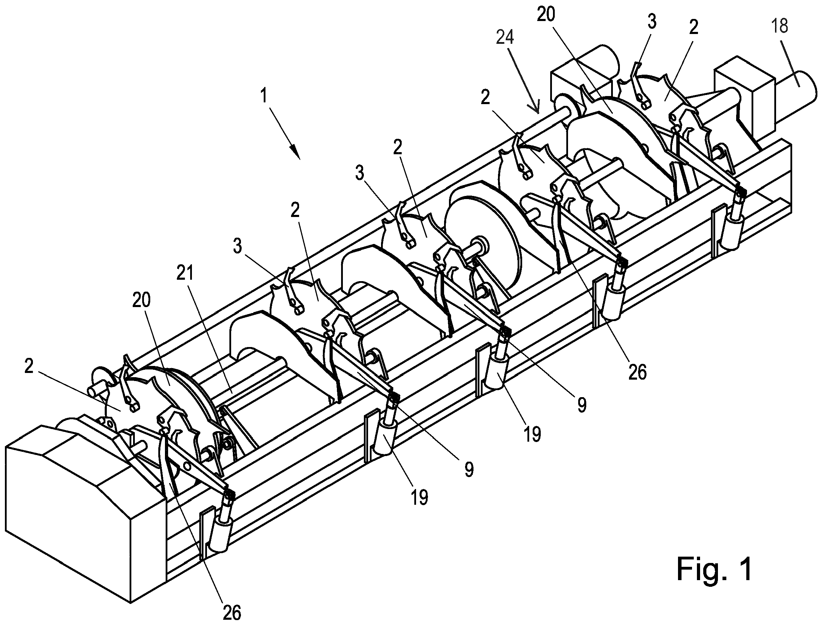

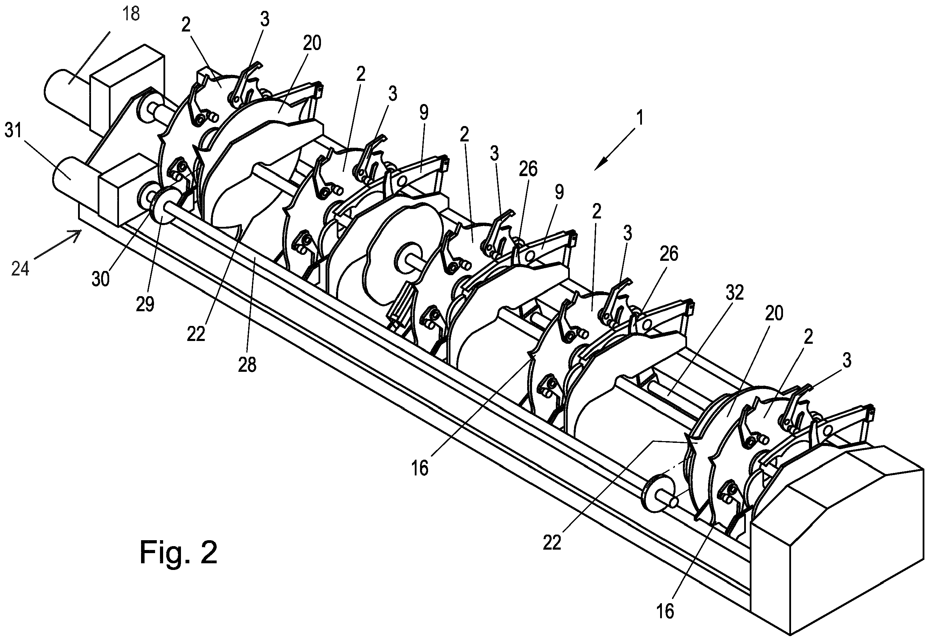

Wie in den Zeichnungen gezeigt, ist neben einzelnen Scheiben 2 mit den Klemmhebeln 3 eine weitere Scheibe 20 vorgesehen, die konzentrisch zu den Scheiben 2 mit den Klemmhebeln 3 auf der Welle 21 gelagert ist. Die weitere Scheibe 20 trägt im gezeigten Ausführungsbeispiel drei Mitnehmer 22. Die Mitnehmer 22 sind, wie aus Fig. 3 ersichtlich, größer ausgebildet als die Mitnehmer 16 an den Scheiben 2 mit den Klemmhebeln 3. Insbesondere sind die Wirkflächen 23 der Mitnehmer 22 länger als die Wirkflächen 17 der Mitnehmer 16 an den Scheiben 2 mit den Klemmhebeln 3. Aus Fig. 1 und 2 ist ersichtlich, dass die weitere Scheibe 20 weniger Mitnehmer 22 aufweist als die Scheiben 2 Mitnehmer 16 hat. Im gezeigten Ausführungsbeispiel haben die Scheiben 2 sechs Mitnehmer 16 und die weitere Scheibe 20 drei Mitnehmer 22.

Der zweiten Scheibe 20 ist ein Drehantrieb 24 zugeordnet, mit dem sie um die Achse 4 gedreht werden kann. Der Drehantrieb 24 umfasst eine von einem Motor 31 angetriebene Welle 28 mit Zahnrädern 29. Die Zahnräder 29 sind über Rollenketten 30 mit der Scheibe 20 verbunden. So kann die auf der Welle 21 gegenüber dieser drehbar gelagerte weitere Scheibe 20 bei Bedarf synchron mit den Scheiben 2 gedreht werden.

Die zweite Scheibe 20 mit den Mitnehmern 22 steht normalerweise still und zwar in einer Stellung, in der ihre Mitnehmer 22 das Umsetzen von Brettern 6 vom Zuführförderer 5 auf den zweiten Förderer 7 nicht behindern. Erst wenn ein Brett 6 herangefördert wird und umzusetzen ist, das größere Abmessungen aufweist, wird die zweite Scheibe 20 mit den Mitnehmern 22 mit Hilfe ihres Drehantriebes 24 synchron zu den ersten Scheiben 2 gedreht und zwar so, dass die Wirkflächen 23 ihrer Mitnehmer 22 mit Wirkflächen 17 der Mitnehmer 16 an den Scheiben 2 mit den Klemmhebeln 3 fluchten.

Das Inbetriebnehmen des Drehantriebes 24 der zweiten Scheibe 20 kann beispielsweise von Hand aus oder durch eine optische Einrichtung 25, welche die Abmessungen, insbesondere die Breite und/oder die Dicke, eines umzusetzenden Brettes 6 erfasst. Wenn Abmessungen des Brettes 6 festgestellt werden, die vorgegebene (einstellbare) Werte überschreiten, wird durch einen Befehl an den Drehantrieb 24 das Drehen der zweiten Scheibe 20 ausgelöst.

Bei der gezeigten Ausführungsform des erfindungsgemäßen Zangengebers 1 ist wenigstens ein Rückhaltehebel 26 vorgesehen (je nach Länge der umzusetzenden Bretter 6 können nebeneinander zwei oder mehr als zwei Rückhaltehebel 26 vorgesehen sein). Der Rückhaltehebel 26 ist in Fig. 3 in mehreren Stellungen gezeigt. Der Rückhaltehebel 26 ist auf einer Welle 32, der ein Drehantrieb zugeordnet ist, festgeklemmt und kann durch Verdrehen der Welle 32 in seine und aus seiner Wirkstellung geschwenkt werden. Der Rückhaltehebel 26 gibt das Heranfördern von Brettern 6 zum Zangengeber 1 erst frei, wenn vom Zangengeber 1 ein Brett 6 erfasst werden soll. So wird zuverlässig verhindert, dass herangeförderte Bretter 6 an den Scheiben 2 und der weiteren Scheibe 20 anliegen und deren Bewegung behindern bzw. selbst beschädigt werden. Der Rückhaltehebel 26 wird, sobald ein Brett 6 vom erfindungsgemäßen Zangengeber 1 umgesetzt werden soll, durch Drehen seiner Welle 32 so weit nach innen verschwenkt, dass der Zangengeber 1 wirksam werden kann, indem ein Brett 6 zwischen einem Mitnehmer 16 und im Falle eines größeren Brettes 6 zusätzlich zwischen einen Mitnehmer 22 und einer Greifbacke 14 eines Klemmhebels 3 geklemmt und zum zweiten Förderer 7 bewegt wird.

Wie in den Fig. 1 und 2 dargestellt, umfasst ein Zangengeber 1 mehrere (im Beispiel fünf) Scheiben 2 mit Klemmhebeln 3. Weitere Scheiben 20 mit den größeren Mitnehmern 22 sind nicht zwingend allen Scheiben 2 mit Klemmhebeln 3 zugeordnet. So sind im gezeigten Ausführungsbeispiel weitere Scheiben 20 nur den beiden äußeren (an den Enden des Zangenförderers 1 angeordneten) Scheiben 2 mit Klemmhebeln 3 zugeordnet.

Zusammenfassend kann ein Ausführungsbeispiel der erfindungsgemäßen Vorrichtung wie folgt beschrieben werden:
Bei einem Zangengeber 1 zum Umsetzen von Brettern 6 von einem Zuführförderer 5 auf einen zweiten Förderer 7 sind Scheiben 2 vorgesehen, von deren Umfang Mitnehmer 16 abstehen. Jedem Mitnehmer 16 ist ein an der Scheibe 2 verschwenkbar gelagerter Klemmhebel 3 mit einer Greifbacke 14 zugeordnet. Die Klemmhebel 3 werden zum Erfassen eines Brettes 6 von einer Zwangssteuerung 9, 10 zu dem zugeordneten Mitnehmer 16 hin verschwenkt und setzen das Brett 6, ohne es um seine Längsachse zu drehen, auf den zweiten Förderer 7 um. Danach wird der Klemmhebel 3 wieder in seine geöffnete Stellung verschwenkt. Für das Umsetzen von Brettern 6 mit größeren Abmessungen sind einzelnen der Scheiben 2 zweite Scheiben 20 zugeordnet, die um die selbe Achse wie die Scheibe 2 drehbar sind und die Mitnehmer 22 aufweisen, deren Wirkflächen 23 breiter ausgebildet sind als die Wirkflächen 17 der Mitnehmer 16 an den Scheiben 2 mit den Klemmhebeln 3. Die zweiten Scheiben 20 werden synchron mit der Scheibe 2 mit den Klemmhebeln 3 gedreht, wenn durch eine optische Einrichtung 25 ein umzusetzendes Brett 6 mit größeren Abmessungen erfasst worden ist.

## Patentansprüche

1. Zangengeber (1) zum Umsetzen von Brettern (6) von einem ersten Förderer (5) auf einen zweiten Förderer (7), mit wenigstens zwei Scheiben (2), an denen Greifbacken (14) aufweisende Klemmhebel (3) verschwenkbar gelagert sind und die vom Außenumfang der Scheiben (2) abstehende Mitnehmer (16) aufweisen, wobei die Klemmhebel (3) durch wenigstens ein elastisches Element in ihre Bereitschaftsstellung verschwenkt sind, in der sie innerhalb des Außenumfanges der Scheiben (2) angeordnet sind, und wobei jeweils einer der Klemmhebel (3) jeder Scheibe (2) zum Klemmen eines Brettes (6) zwischen einem Mitnehmer (16) und einer Greifbacke (14) einer der Klemmhebel (3) durch eine Zwangssteuerung (9, 10) verschwenkt wird, wobei wenigstens einer der Scheiben (2) eine weitere Scheibe (20) mit Mitnehmern (22) zugeordnet ist, **dadurch gekennzeichnet, dass** die weitere Scheibe (20) wahlweise stillsteht oder synchron mit der Scheibe (2) mit Klemmhebeln (3) drehangetrieben ist.

2. Zangengeber nach Anspruch 1, **dadurch gekennzeichnet, dass** die Mitnehmer (22) der weiteren Scheibe (20) Wirkflächen (23) haben, die länger ausgebildet sind als die Wirkflächen (17) der Mitnehmer (16) an den Scheiben (2) mit den Klemmhebeln (3).

3. Zangengeber nach Anspruch 1 oder 2, **dadurch gekennzeichnet, dass** die Zahl der Mitnehmer (22) an der weiteren Scheibe (20) kleiner ist als die Zahl der Mitnehmer (16) an den Scheiben (2) mit den Klemmhebeln (3).

4. Zangengeber nach einem der Ansprüche 1 bis 3, **dadurch gekennzeichnet, dass** den Scheiben (2) mit den Klemmhebeln (3) eine Einrichtung (25) vorgeordnet ist, welche die Abmessungen eines umzusetzenden Brettes (6) erfasst, und dass die Einrichtung (25) das synchrone Drehen der weiteren Scheibe (20) mit den Scheiben (2) mit den Klemmhebeln (3) auslöst, wenn ein Brett (6) mit Abmessungen erfasst wird, die größer sind als ein vorgegebener Wert.

5. Zangengeber nach einem der Ansprüche 1 bis 4, **dadurch gekennzeichnet, dass** dem Zangengeber (1) im Bereich des Endes des ersten Förderers (5) wenigstens ein Rückhaltehebel (26) zugeordnet ist, der in seiner Wirkstellung ein auf dem ersten Förderer (5) herangefördertes Brett (6) im Abstand von den Scheiben (2) und der Scheibe (20) des Zangengebers (1) hält.

6. Zangengeber nach einem der Ansprüche 1 bis 5, **dadurch gekennzeichnet, dass** mehr als zwei Scheiben (2) mit Klemmhebeln (3) vorgesehen sind und dass weitere Scheiben (20) mit größeren Mitnehmern (22) den äußeren Scheiben (2) mit Klemmhebeln (3) zugeordnet sind.

7. Zangengeber nach einem der Ansprüche 1 bis 6, **dadurch gekennzeichnet, dass** die Scheiben (2) mit Klemmhebeln (3) und die wenigstens eine weitere Scheibe (20) gleichachsig angeordnet sind.

8. Zangengeber nach einem der Ansprüche 1 bis 7, **dadurch gekennzeichnet, dass** die weiteren Scheiben (20) auf der die Scheiben (2) tragenden Welle (21) gegenüber der Welle (21) drehbar gelagert sind.

9. Zangengeber nach einem der Ansprüche 1 bis 8, **dadurch gekennzeichnet, dass** der wenigstens einen weiteren Scheibe (20) ein Drehantrieb (18) zugeordnet ist, der vom Drehantrieb (24) der Scheiben (2) mit Klemmhebeln (3) unabhängig aktivierbar ist.

## Claims

1. Transfer device (1) with pliers for transferring boards (6) from a first conveyor (5) to a second conveyor (7), having at least two discs (2) on which clamping levers (3) having gripping jaws (14) are pivotably mounted and which comprise drivers (16) projecting from the outer periphery of the discs (2), wherein the clamping levers (3) are pivoted by at least one elastic element into their standby position, in which they are arranged within the outer periphery of the discs (2), and wherein in each case one of the clamping levers (3) of each disc (2) is pivoted for clamping a board (6) between a driver (16) and a gripping jaw (14) of one of the clamping levers (3) by a positive control means (9, 10), wherein at least one of the discs (2) is associated with a further disc (20) with drivers (22), **characterized in that** the further disc (20) either stands still or is synchronously driven in rotation with the disc (2) with the clamping levers (3).

2. Transfer device with pliers according to claim 1, **characterized in that** the drivers (22) of the further disc (20) have active surfaces (23) which are formed longer than the active surfaces (17) of the drivers (16) on the discs (2) with the clamping levers (3).

3. Transfer device with pliers according to claim 1 or 2, **characterized in that** the number of drivers (22) on the further disc (20) is smaller than the number of drivers (16) on the discs (2) with the clamping levers (3).

4. Transfer device with pliers according to one of the claims 1 to 3, **characterized in that** a device (25) is arranged upstream of the discs (2) with the clamping levers (3), which device detects the dimensions of a board (6) to be transferred, and that the device (25) triggers the synchronous rotation of the further disc (20) with the discs (2) with the clamping levers (3) when a board (6) is detected with dimensions that are greater than a predetermined value.

5. Transfer device with pliers according to one of the claims 1 to 4, **characterized in that** the transfer device (1) with pliers is associated with at least one retaining lever (26) in the region of the end of the first conveyor (5), which lever, in its operative position, keeps a board (6) that is conveyed up on the first conveyor (5) at a distance from the discs (2) and the disc (20) of the transfer device (1) with pliers.

6. Transfer device with pliers according to one of the claims 1 to 5, **characterized in that** more than two discs (2) are provided with clamping levers (3) and that further discs (20) with larger drivers (22) are associated with the outer discs (2) with clamping levers (3).

7. Transfer device with pliers according to one of the claims 1 to 6, **characterized in that** the discs (2) with clamping levers (3) and the at least one further disc (20) are arranged coaxially.

8. Transfer device with pliers according to one of the claims 1 to 7, **characterized in that** the further discs (20) on the shaft (21) carrying the discs (2) are rotatably mounted relative to the shaft (21).

9. Transfer device with pliers according to one of the claims 1 to 8, **characterized in that** the at least one further disc (20) is associated with a rotary drive (18), which can be activated independently by the rotary drive (24) of the discs (2) with clamping levers (3).

## Revendications

1. Dispositif d'alimentation à pinces (1) pour transférer des planches (6) d'un premier convoyeur (5) à un deuxième convoyeur (7), comportant au moins deux disques (2) sur lesquels sont montés de manière pivotante des leviers de serrage (3) présentant des mâchoires de prise (14) et qui présentent des éléments d'entraînement (16) dépassant de la périphérie extérieure des disques (2), dans lequel les leviers de serrage (3) sont pivotés par au moins un élément élastique dans leur position d'attente dans laquelle ils sont disposés à l'intérieur de la périphérie extérieure des disques (2) et dans lequel, pour serrer une planche (6), chaque fois l'un des leviers de serrage (3) de chaque disque (2) est pivoté entre un élément d'entraînement (16) et une mâchoire de prise (14) de l'un des leviers de serrage (3) par une commande forcée (9, 10), dans lequel au moins l'un des disques (2) est associé à un autre disque (20) muni d'éléments d'entraînement (22), **caractérisé en ce que** l'autre disque (20) est sélectivement immobile ou entraîné en rotation de manière synchrone avec le disque (2) muni de leviers de serrage (3).

2. Dispositif d'alimentation à pinces selon la revendication 1, **caractérisé en ce que** les éléments d'entraînement (22) de l'autre disque (20) possèdent des surfaces actives (23) qui sont plus longues que les surfaces actives (17) des éléments d'entraînement (16) sur les disques (2) munis des leviers de serrage (3).

3. Dispositif d'alimentation à pinces selon la revendication 1 ou 2, **caractérisé en ce que** le nombre d'éléments d'entraînement (22) sur l'autre disque (20) est inférieur au nombre d'éléments d'entraînement (16) sur les disques (2) munis des leviers de serrage (3).

4. Dispositif d'alimentation à pinces selon l'une des revendications 1 à 3, **caractérisé en ce qu'**un dispositif (25) est disposé en amont des disques (2) munis des leviers de serrage (3), lequel détecte les dimensions d'une planche (6) à transférer, et **en ce que** le dispositif (25) déclenche la rotation synchrone de l'autre disque (20) avec les disques (2) munis des leviers de serrage (3) lorsqu'une planche (6) dont les dimensions sont supérieures à une valeur prédéterminée est détectée.

5. Dispositif d'alimentation à pinces selon l'une des revendications 1 à 4, **caractérisé en ce qu'**au moins un levier de retenue (26) est associé au dispositif d'alimentation à pinces (1) dans la zone de l'extrémité du premier convoyeur (5), lequel, dans sa position active, maintient une planche (6) transportée sur le premier convoyeur (5) à une certaine distance des disques (2) et du disque (20) du dispositif d'alimentation à pinces (1).

6. Dispositif d'alimentation à pinces selon l'une des revendications 1 à 5, **caractérisé en ce que** plus de deux disques (2) munis de leviers de serrage (3) sont prévus et **en ce que** d'autres disques (20) munis d'éléments d'entraînement plus grands (22) sont associés aux disques extérieurs (2) munis de leviers de serrage (3).

7. Dispositif d'alimentation à pinces selon l'une des revendications 1 à 6, **caractérisé en ce que** les disques (2) munis de leviers de serrage (3) et ledit au moins un autre disque (20) sont disposés sur le même axe.

8. Dispositif d'alimentation à pinces selon l'une des revendications 1 à 7, **caractérisé en ce que** les autres disques (20) sont montés à rotation par rapport à l'arbre (21) sur l'arbre (21) portant les disques (2).

9. Dispositif d'alimentation à pinces selon l'une des revendications 1 à 8, **caractérisé en ce qu'**un entraînement rotatif (18) est associé audit au moins un autre disque (20), lequel peut être activé indépendamment de l'entraînement rotatif (24) des disques (2) munis de leviers de serrage (3).
